# EUROPEAN PATENT APPLICATION

(11) **EP 3 193 421 A1**
(43) Date of publication of application: **19.07.2017**
(21) Application number: 15840393.1
(22) Date of filing: 02.07.2015
(51) Int. Cl.: H02J 3/38, G06Q 50/16, H02J 3/46, H02J 7/35, H02J 13/00

(54) **DEVICE OPERATION PLAN CREATION DEVICE, DEVICE OPERATION PLAN CREATION METHOD, AND STORAGE MEDIUM STORING DEVICE OPERATION PLAN CREATION PROGRAM**

(30) Priority: 12.09.2014 JP 2014186551
(71) Applicant: Kabushiki Kaisha Toshiba, Minato-ku Tokyo 105-8001 (JP)
(72) Inventor: SUYAMA Akihiro, Tokyo 105-8001 (JP); KUBOTA Kazuto, Tokyo 105-8001 (JP); EDAHIRO Toshiaki, Tokyo 105-8001 (JP)
(74) Representative: Moreland, David
(86) International application number: PCT/JP2015/069140
(87) International publication number: WO 2016/038994

(57) **Abstract**

An apparatus operation plan creation device according to an embodiment includes a power generation quantity predictor, a power demand predictor, a hot water demand predictor, an estimator, a decider, a calculator, and a plan creator. The power generation quantity predictor predicts a quantity of power generation. The power demand predictor predicts a quantity of power demand. The hot water demand predictor predicts a quantity of hot water demand. The estimator estimates a quantity of power generation by a fuel cell based on a predicted value of a quantity of hot water demand. The decider decides a quantity of power storage of a storage battery. The calculator calculates a power storage loss and a power purchase loss based on a predicted value of a quantity of power generation, a predicted value of a quantity of power demand, and a quantity of power storage of a storage battery, and calculates a deduction amount that is obtained by subtracting the sum of the power storage loss and the power purchase loss from a power sales profit that is based on the quantity of power generation. The plan creator creates a threshold value for defining a charging or discharge operation of the storage battery and a plan for an operation or stop operation of the fuel cell such that the deduction amount is increased.

## Description

### [Technical Field]

An embodiment of the present invention relates to an apparatus operation plan creation device, an apparatus operation plan creation method, and an apparatus operation plan creation program.

### [Background Art]

There are cases in which server devices for household consumers control apparatuses such as storage batteries or fuel cells installed in residences of the household consumers. In the related art, however, it was not easy to reduce their lighting and heating expenses.

### [Citation List]

### [Patent Literature]

### [Patent Literature 1]

Japanese Unexamined Patent Application, First Publication No. 2013-222293A

### [Summary of Invention]

### [Technical Issue]

An objective of the present invention is to provide an apparatus operation plan creation device, an apparatus operation plan creation method, and an apparatus operation plan creation program which can reduce lighting and heating expenses.

### [Solution to Issue]

An apparatus operation plan creation device according to an embodiment has a power generation quantity predictor, a power demand predictor, a hot water demand predictor, an estimator, a decider, a calculator, and a plan creator. The power generation quantity predictor predicts a quantity of power generation of a photovoltaic device of a household consumer. The power demand predictor predicts a quantity of power demand of the household consumer. The hot water demand predictor predicts a quantity of hot water demand of the household consumer. The estimator estimates a quantity of power generation by a fuel cell of the household consumer based on a predicted value of a quantity of hot water demand. The decider decides a quantity of power storage of a storage battery based on a predicted value of a quantity of power demand and an estimated value of a quantity of power generation by the fuel cell. The calculator calculates, based on a predicted value of the quantity of power generation of the photovoltaic device, a predicted value of the quantity of power demand, and the quantity of power storage of the storage battery, a power storage loss caused by charging of the storage battery and a power purchase loss that is based on the predicted value of the quantity of power demand, subtracts the sum of the power storage loss and the power purchase loss from a power sales profit that is based on the predicted value of the quantity of power generation of the photovoltaic device, and calculates a deduction amount that is the result of the subtraction. The plan creator creates a threshold value for defining a charging or discharge operation of the storage battery and a plan for a operation or stop operation of the fuel cell such that the deduction amount is increased.

### [Brief Description of Drawings]

Fig. 1 is a diagram of an energy management system according to an embodiment.
Fig. 2 is a diagram of a cloud server device according to an embodiment.
Fig. 3 is a diagram of a table showing efficiency of charging and discharge.
Fig. 4 is a diagram of a table showing electricity prices according to an embodiment.
Fig. 5 is a diagram of a table showing a purchase price according to an embodiment.
Fig. 6 is a diagram of a local server device according to an embodiment.
Fig. 7 is a diagram showing an operation of the cloud server device according to an embodiment.
Fig. 8 is a diagram showing an operation of the local server device according to an embodiment.

### [Description of Embodiments]

Hereinafter, an apparatus operation plan creation device, an apparatus operation plan creation method, and an apparatus operation plan creation program according to an embodiment will be described with reference to drawings.

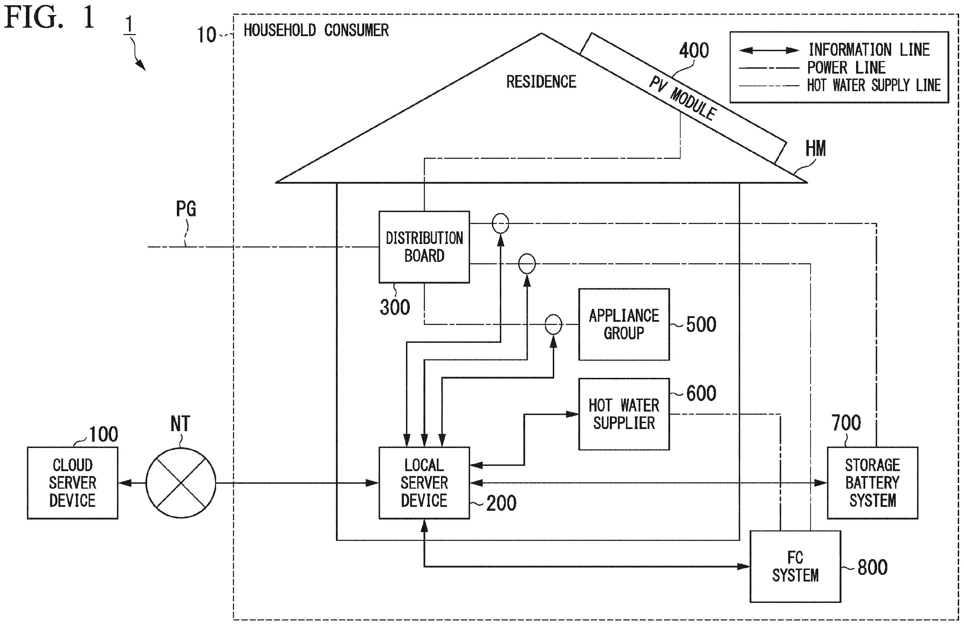

Fig. 1 is a diagram of an energy management system 1 according to an embodiment. The energy management system 1 includes a household consumer 10, a communication line NT, and a cloud server device 100. The energy management system 1 manages energy consumption of the household consumer 10. The cloud server device 100 is a device that creates plans for operation of apparatuses of the household consumer 10 (an apparatus operation plan creation device). The cloud server device 100 may have a cloud computing system, or may be a single server device without a cloud computing system.

The household consumer 10 includes a local server device 200, a distribution board 300, a PV module 400, an appliance group 500, a hot water supplier 600, a storage battery system 700, and an FC system 800. The local server device 200, the distribution board 300, the appliance group 500, and the hot water supplier 600 are provided in, for example, indoor places of a residence HM. The PV module 400 is provided on, for example, the roof of the residence HM. The storage battery system 700 and the FC system 800 are provided in, for example, outdoor places of the residence HM.

The household consumer 10 has a double power generation contract with an electric power company. The double power generation contract refers to a contract under which the photovoltaics (PV) module 400, the storage battery system 700, and the fuel cell (FC) system 800 need to be provided in the residence HM. The PV module 400, the appliance group 500, and the storage battery system 700 are connected to a power system PG via the distribution board 300.

The local server device 200 operates in cooperation with the cloud server device 100. The local server device 200 communicates with the cloud server device 100 via the communication line NT such as the Internet. The local server device 200 communicates with the cloud server device 100 using a technology such as Internet Protocol (IP)-Virtual Private Network (VPN), or the like.

The local server device 200 communicates with the PV module 400, the appliance group 500, the hot water supplier 600, the storage battery system 700, and the FC system 800 via information lines. A protocol of this communication is, for example, "ECHONET (a registered trademark) Lite." The local server device 200 may use power lines as information lines using a power line communication (PLC) technology.

The distribution board 300 has an earth-leakage circuit breaker or a wiring breaker.

The PV module 400 is a photovoltaic device. Thus, the PV module 400 is an energy production apparatus. The PV module 400 generates electric power using sunlight. The PV module 400 converts generated direct-current (DC) power into alternating-current (AC) power with a power conditioning system (PCS, which is not illustrated). The PCS can bi-directionally convert DC power and AC power. The PV module 400 supplies AC power to power lines of the residence power HM.

The appliance group 500 acquires power through a power line. The appliance group 500 consumes the acquired power.

The hot water supplier 600 acquires hot water from the FC system 800 through a hot water supply line.

The storage battery system 700 is an energy storage apparatus. The storage battery system 700 stores power in its own system by being charged with power from the power system PG. The storage battery system 700 is charged with power from the PV module 400 via a power line and the distribution board 300, and thereby stores power in its own system. Power stored in the storage battery system 700 is converted into direct current to cover a quantity of power consumption of the household consumer 10.

The storage battery system 700 causes power to reversely flow by discharging power to the commercial power system PG via the power line and the distribution board 300. Since the energy management system 1 can take advantage of a profit boosting effect by securing reverse flowing of power, it is possible to gain a large quantity of power sales benefit in comparison to a case in which it does not take advantage of a power boosting effect. The profit boosting effect refers to an effect that a quantity of power sold from the power generated by the PV module 400 increases by jointly installing an energy production apparatus such as the FC system 800.

The FC system 800 is an energy production apparatus. The FC system 800 has, for example, a gas boiler. The FC system 800 generates DC power using purchased gas. The FC system 800 converts the DC power into AC power with the power conditioning system (not illustrated). The FC system 800 supplies this AC power to a power line of the residence HM. The FC system 800 stores exhaust heat resulting from power generation in the form of hot water. The FC system 800 supplies hot water to the hot water supply line of the residence HM.

The FC system 800 supplies a necessary quantity of hot water using the hot water supplier 600 when the quantity of hot water being supplied to the residence HM is insufficient. When the quantity of power that the FC system 800 supplies to the power lines of the residence HM exceeds the quantity of power consumption of the appliance group 500, the FC system 800 can prevent a reverse power flow to an inappropriate system using a reverse power flow prevention heater.

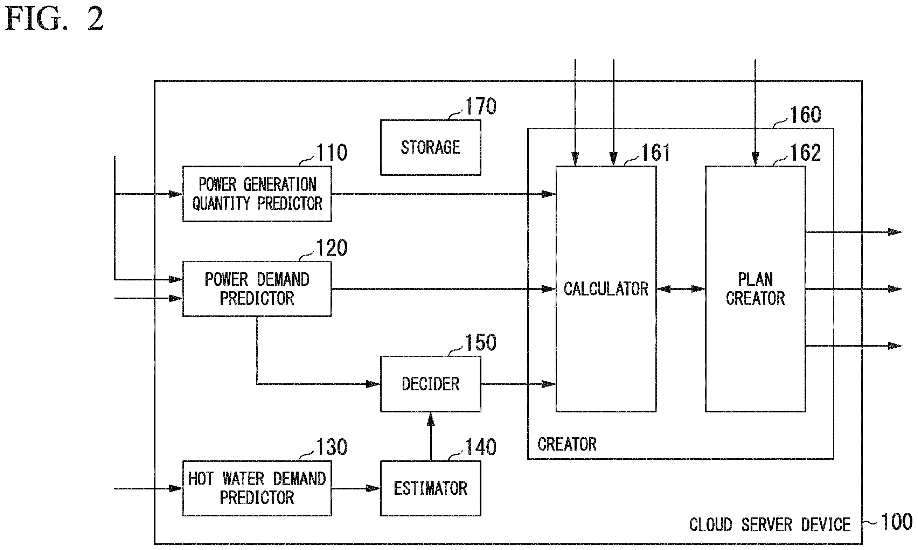

Fig. 2 is a diagram of the cloud server device 100 according to an embodiment. The cloud server device 100 includes a power generation quantity predictor 110, a power demand predictor 120, a hot water demand predictor 130, an estimator 140, a decider 150, a creator 160, and a storage 170. The creator 160 has a calculator 161 and a plan creator 162.

Some or all of the power generation quantity predictor 110, the power demand predictor 120, the hot water demand predictor 130, the estimator 140, the decider 150, the calculator 161, and the plan creator 162 are a software function part that functions as a processor, for example, a central processing unit (CPU), or the like, and executes a program stored in the storage 170. In addition, some or all of these function parts may be a hardware function part such as large scale integration (LSI) or an application specific integrated circuit (ASIC).

The power generation quantity predictor 110 receives weather forecast information via a predetermined communication line. The power generation quantity predictor 110 predicts a quantity of power generation of the PV module 400 for the household consumer 10 based on the weather forecast information. The power generation quantity predictor 110 transmits information indicating a predicted value of the quantity of power generation of the PV module 400 to the creator 160.

The power demand predictor 120 receives power demand quantity history information via a predetermined communication line. The power demand predictor 120 predicts a quantity of power demand of the household consumer 10 based on the power demand quantity history information. The power demand predictor 120 predicts the quantity of power demand of the household consumer 10 based on, for example, the maximum value, the minimum value, or the average value of the quantity of power demand for the recent three days. The power demand predictor 120 transmits information indicating a predicted value of the quantity of power demand to the decider 150 and the creator 160.

The hot water demand predictor 130 receives hot water demand quantity history information via a predetermined communication line. The hot water demand predictor 130 predicts a quantity of hot water demand of the household consumer 10 based on the hot water demand amount history information. The hot water demand predictor 130 transmits information indicating the predicted value of the quantity of hot water demand to the estimator 140.

The estimator 140 estimates a quantity of power generation of the FC system 800 based on power generation characteristics of the FC system 800 and the predicted value of the quantity of hot water demand. The estimator 140 transmits information indicating the estimated value of the quantity of power generation of the FC system 800 to the decider 150.

The decider 150 decides a quantity of power storage of the storage battery system 700 based on the predicted value of the quantity of power demand and the estimated value of the quantity of power generation of the FC system 800. In other words, the decider 150 decides a quantity of energy to be managed by the storage battery system 700. The decider 150 transmits information indicating the quantity of power storage of the storage battery system 700 to the creator 160.

Hereinbelow, the sum of an amount of a power purchase loss compensated for as a result of discharge of the storage battery system 700 recouping a predicted value of a quantity of power demand and a power sales profit that is based on a predicted value of a quantity of power generation of the PV module 400 will be referred to as a "predicted value of a discharge value."

Hereinbelow, it is the result obtained by subtracting the sum of a power storage loss caused by charging of the storage battery system 700 and a power purchase loss based on a predicted value of a quantity of power demand from a power sales profit based on a predicted value of a quantity of power generation of the PV module 400 (hereinafter referred to as a "deduction amount").

Hereinafter, the value obtained by dividing a predicted value of a discharge value by a quantity of power discharged by the storage battery system 700 will be referred to as a "predicted value of a discharge unit price." That is, a discharge unit price refers to a discharge value per quantity of power discharged from the storage battery system 700.

Hereinafter, the value obtained by subtracting a unit price of a power storage loss caused by charging of the storage battery system 700 from an increment by which a predicted value of a discharge unit price increases according to the charging of the storage battery system 700 will be referred to as a "charge unit price." That is, a charging unit price is a charging value per quantity of power charged to the storage battery system 700.

The creator 160 has the calculator 161 and the plan creator 162. The calculator 161 calculates a deduction amount based on a predicted value of a generation quantity of the PV module 400, a predicted value of a power demand amount, a storage amount of the storage battery system 700, efficiency of charge/discharge of the storage battery system 700, and an electricity price of each time slot. The calculator 161 calculates a predicted value of a charging unit price based on a deduction amount. The calculator 161 calculates a predicted value of a discharge value and a predicted value of a discharge unit price based on a predicted value of a charging unit price.

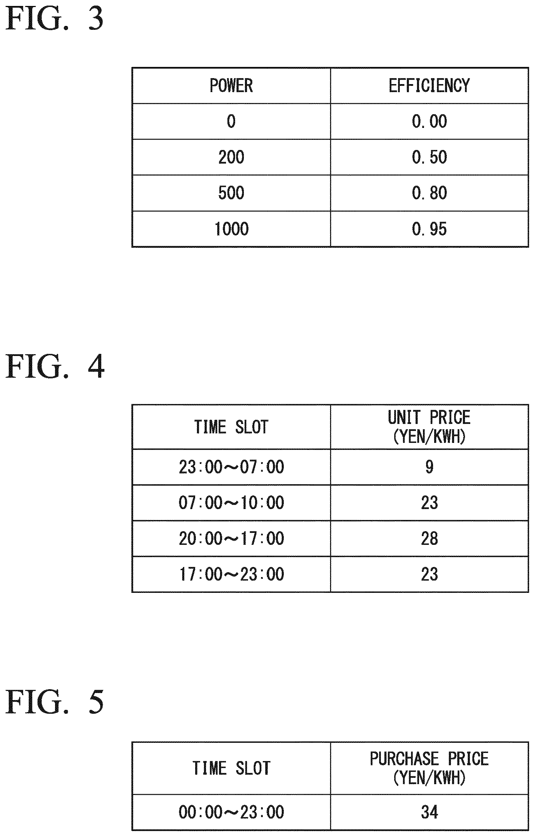

Fig. 3 is a diagram of a table showing efficiency of charging and discharge according to an embodiment. In the table showing efficiency of charging and discharge (hereinafter referred to as a "charge and discharge efficiency table"), quantities of power charged or discharged are associated with degrees of efficiency. The charging and discharge efficiency table is a table in which quantities of power charged to the storage battery system 700 are associated with degrees of efficiency in charging the quantities of power. The charging and discharge efficiency table may be a table in which quantities of power discharged from the storage battery system 700 are associated with degrees of efficiency in discharging the quantities of power. In Fig. 3, the charging and discharge efficiency table indicates that, for example, the degree of efficiency in charging electric power at 500 watts is 0.8. Similarly, the charging and discharge efficiency table indicates that, for example, the degree of efficiency in discharging electric power at 500 watts is 0.8. Note that degrees of efficiency not described in this charging and discharge efficiency table may be obtained through interpolation.

Fig. 4 is a diagram of a table showing electricity prices according to an embodiment. The electricity price table is a table of a list of power purchase unit prices with respect to respective time slots. The electricity price table indicates that the electricity price of the time slot including a daytime demand peak is over three times the electricity price of a nighttime.

Fig. 5 is a diagram of a table showing a purchase price according to an embodiment. The purchase price table indicates a purchase price (power sales unit price) of surplus electric power generated by the PV module 400 for each time slot. In Fig. 5, the purchase price is uniformly 34 yen regardless of time slot.

The plan creator 162 acquires information indicating the actual value of a quantity of remaining power stored in the storage battery system 700 from the local server device 200 via the communication line NT. The plan creator 162 creates a threshold value for defining a charging operation of the storage battery system 700 (a charging rule) based on the predicted value of a discharge unit price and the actual value of the quantity of remaining power stored in the storage battery system 700. The plan creator 162 creates a threshold value for defining a discharge operation of the storage battery system 700 based on the predicted value of a discharge unit price and the actual value of the quantity of remaining power stored in the storage battery system 700. The plan creator 162 creates a plan for a operation or stop operation of the FC system 800 based on the predicted value of the discharge unit price and the actual value of the quantity of remaining power stored in the storage battery system 700.

The plan creator 162 creates the threshold value for defining a charging operation of the storage battery system 700, the threshold value for defining a discharge operation of the storage battery system 700, and a plan for a operation or stop operation of the FC system 800 such that a deduction amount is increased.

The plan creator 162 transmits information indicating the threshold value for defining the charging or discharge operation of the storage battery system 700 and information indicating the plan for a operation and stop operation of the FC system 800 to the local server device 200 of the household consumer 10 via the communication line NT.

The storage 170 has a non-volatile storage medium (a non-transitory storage medium), for example, a read only memory (ROM), a flash memory, or a hard disk drive (HDD). The storage 170 may also have a volatile storage medium, for example, a random access memory (RAM), or a register.

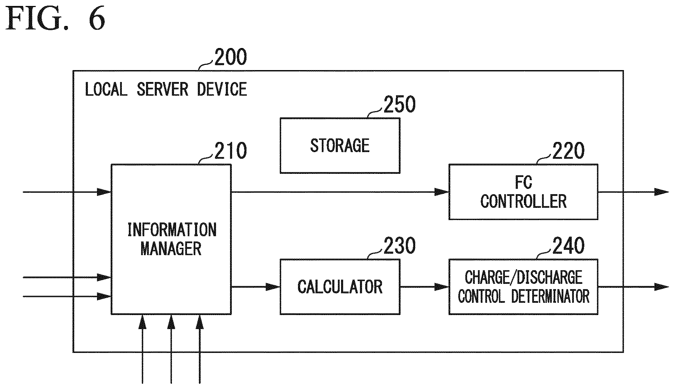

Fig. 6 is a diagram of the local server device 200 according to an embodiment. The local server device 200 has an information manager 210, an FC controller 220, a calculator 230, a charge/discharge control determinator 240, and a storage 250.

Some or all of the information manager 210, the FC controller 220, the calculator 230, and the charge/discharge control determinator 240 are a software function part that functions as a processor, for example, a CPU, and executes a program stored in the storage 250. In addition, some or all of the function parts may be a hardware function part such as an LSI or an ASIC.

The information manager 210 transmits information indicating a quantity of power generation of the PV module 400, information indicating a quantity of power consumption of the appliance group 500, information indicating a quantity of hot water from the hot water supplier, information indicating the quantity of remaining power stored in the storage battery system 700, and information indicating the quantity of power charged or discharged for the storage battery system 700 to the cloud server device 100 via the communication line NT as actual values measured with respect to the residence HM.

The information manager 210 receives information indicating the threshold value for defining a charging operation of the storage battery system 700 (a charging rule), information indicating the threshold value for defining a discharge operation of the storage battery system 700 (a discharge rule), and information indicating the plan for a operation or stop operation of the FC system 800 (a operation plan) from the cloud server device 100 via the communication line NT.

The FC controller 220 controls operation and a stop of the FC system 800 based on the information indicating the plan for a operation or a stop operation of the FC system 800.

The calculator 230 calculates a predicted value of a charging unit price and a predicted value of a discharge unit price based on actual values, rather than predicted values, unlike the calculator 161 of the cloud server device 100. Specifically, the calculator 230 calculates a deduction amount based on the actual value of a quantity of power generation of the PV module 400, the actual value of a quantity of power demand, a quantity of power storage of the storage battery system 700, charge/discharge efficiency of the storage battery system 700, and an electricity price per time slot. The calculator 230 calculates the actual value of the charging unit price based on the deduction amount. The calculator 230 calculates the actual value of a discharge value and the actual value of a discharge unit price based on the actual value of the charging unit price.

The charge/discharge control determinator 240 acquires the information indicating the threshold value for defining a charging operation of the storage battery system 700 and information indicating the threshold value for defining a discharge operation of the storage battery system 700. The charge/discharge control determinator 240 causes the storage battery system 700 to be discharged when the threshold value of the discharge unit price is lower than a discharge unit price. The charge/discharge control determinator 240 causes the storage battery system 700 to be charged when the threshold value of the discharge unit price is not lower than the discharge unit price and the threshold value of the charging unit price is lower than the charging unit price. The charge/discharge control determinator 240 causes charging or discharge of the storage battery system 700 to stop when the threshold value of the discharge unit price is not lower than the discharge unit price and the threshold value of the charging unit price is not lower than the charging unit price.

The storage 250 has a non-volatile storage medium (a non-transitory storage medium), for example, a ROM, a flash memory, or an HDD. The storage 250 may have a volatile storage medium, for example, a RAM, or a register.

Next, an operation of the energy management system 1 will be described.

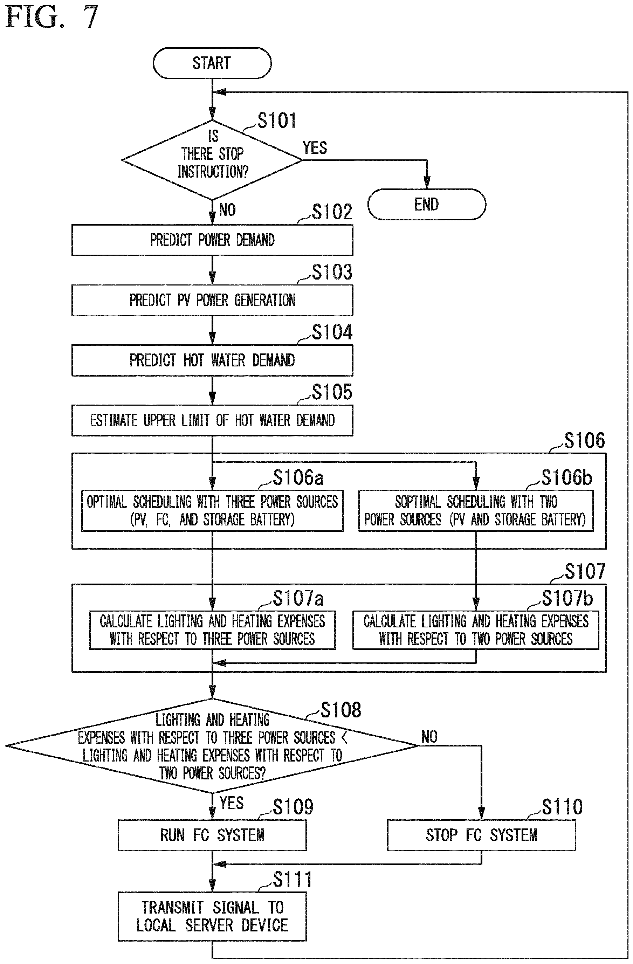

Fig. 7 is a diagram showing an operation of the cloud server device 100 (creation of the discharge rule) according to an embodiment. The operation shown in Fig. 7 is repeatedly executed in, for example, a one-minute cycle, a one-hour cycle, or a one-day cycle. Hereinafter, t refers to a time in any one day. When one day (a reference period) is expressed in sets of 30 minutes (a unit period), for example, the range of t is 0 to 47.

The plan creator 162 determines whether a signal indicating a stop has been received (Step S101). A user of the household consumer 10 can transmit the signal indicating a stop to the plan creator 162 from outside of the cloud server device 100 by operating an operation key (not illustrated).

A predicted value of a quantity of power demand when two power sources (the PV module 400 and the storage battery system 700) are operated will be hereinbelow denoted by "D(t)." A predicted value of a quantity of power demand when three power sources (the PV module 400, the storage battery system 700, and the FC system 800) are operated will be hereinafter denoted by "Deff(t)."

When the signal indicating a stop has been received (Yes in Step S101), the plan creator 162 ends the process shown in Fig. 7. When the signal indicating a stop has not been received (No in Step S101), the power demand predictor 120 predicts a quantity of power demand. The power demand predictor 120 obtains a predicted value D(t) of the quantity of time-series power demand (Step S102).

The power generation quantity predictor 110 predicts a quantity of power generation of the PV module 400. The power generation quantity predictor 110 obtains a predicted value PV(t) of the quantity of time-series power generation of the PV module 400 (Step S103).

The hot water demand predictor 130 predicts a quantity of hot water demand based on a hot water demand history. The hot water demand predictor 130 obtains a predicted value Q(t) of the quantity of time-series hot water demand (Step S104).

The estimator 140 estimates an upper limit of the predicted value of the quantity of hot water demand through computation of a prediction confidence interval. The estimator 140 thereby obtains the upper limit Q_upper(t) of the predicted value of the quantity of time-series hot water demand. The estimator 140 estimates a quantity of power generation of the FC system 800 based on the upper limit of the predicted value of the quantity of hot water demand. The estimator 140 obtains the upper limit Pfc_upper(t) of the quantity of time-series power generation of the FC system 800.

The decider 150 calculates a quantity of power demand necessary in parts other than the FC system 800 in the household consumer 10 by subtracting the upper limit Pfc_upper(t) of the quantity of time-series power generation of the FC system 800 from the predicted value D(t) of the quantity of time-series power demand. This calculated quantity of power demand is the predicted value Deff(t) of the quantity of time-series power demand (Step S105).

The plan creator 162 creates a operation plan (an optimal schedule) when the three power sources (the PV module 400, the storage battery system 700, and the FC system 800) are operated (Step S106a). This operation plan is expressed with the predicted value Deff(t) of the quantity of power demand, the predicted value PV(t) of the quantity of power generation of the PV module 400, the threshold value for defining a charging operation of the storage battery system 700, and the threshold value for defining a discharge operation of the storage battery system 700.

The plan creator 162 creates a operation plan (an optimal schedule) when the two power sources (the PV module 400 and the storage battery system 700) are operated (Step S106b). This operation schedule is expressed with the predicted value D(t) of the quantity of power demand, the predicted value PV(t) of the quantity of power generation of the PV module 400, the threshold value for defining a charging operation of the storage battery system 700, and the threshold value for defining a discharge operation of the storage battery system 700.

The calculator 161 calculates a lighting and heating expense when the three power sources are operated based on the operation plan created by the plan creator 162 (Step S107a).

The calculator 161 calculates a lighting and heating expense when the two power sources are operated based on the operation plan created by the plan creator 162 (Step S107b).

The plan creator 162 creates the plan for a operation or stop operation of the FC system 800 such that a deduction amount is increased. Specifically, the plan creator 162 determines whether the lighting and heating expense when the three power sources are operated is smaller than the lighting and heating expense when the two power sources are operated (Step S108).

When the lighting and heating expense when the three power sources are operated is smaller than the lighting and heating expense when the two power sources are operated (Yes in Step S108), the plan creator 162 generates a signal for operatiing the FC system 800 (Step S109).

When the lighting and heating expense when the three power sources are operated is equal to or greater than the lighting and heating expense when the two power sources are operated (No in Step S108), the plan creator 162 generates a signal for stopping the FC system 800 (Step S110).

When the signal for operating the FC system 800 is generated, the plan creator 162 transmits the signal for operating the FC system 800 to the local server device 200. When the signal for stopping the FC system 800 is generated, the plan creator 162 transmits the signal for stopping the FC system 800 to the local server device 200 (Step S111).

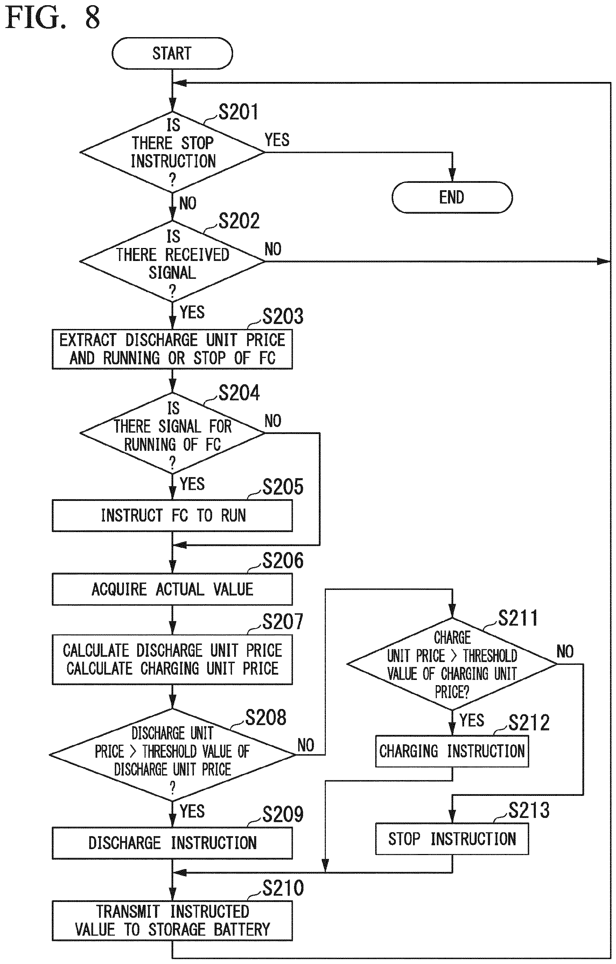

Fig. 8 is a diagram showing an operation of the local server device 200 according to an embodiment. The operation shown in Fig. 8 is repeatedly executed in, for example, a one-minute cycle, a one-hour cycle, or a one-day cycle.

The information manager 210 determines whether a signal indicating a stop has been received (Step S201). A user of the household consumer 10 can transmit the signal indicating a stop to the information manager 210 from outside of the local server device 200 by operating an operation key (not illustrated).

When a signal indicating a stop has been received (Yes in Step S201), the information manager 210 ends the process shown in Fig. 8. When no signal indicating a stop has been received (No in Step S201), the information manager 210 determines whether there is a signal received from the cloud server device 100. When no signal has been received from the cloud server device 100 (No in Step S202), the information manager 210 returns the process to Step S201.

When there is a signal received from the cloud server device 100 (Yes in Step S202), the information manager 210 extracts information indicating a discharge unit price, a signal for operating the FC system 800, or a signal for stopping the FC system 800 from the received signal. The information manager 210 transfers the information indicating the discharge unit price to the calculator 230 (Step S203).

The information manager 210 determines whether the signal for operating the FC system 800 has been received (Step S204). When no signal for operating the FC system 800 has been received (No in Step S204), the information manager 210 advances the process to Step S206.

When the signal for operating the FC system 800 has been received (Yes in Step S204), the information manager 210 transfers the signal for operating the FC system 800 to the FC controller 220 (Step S205).

The information manager 210 acquires the actual value of a power demand amount. The information manager 210 acquires the actual value of a generation quantity of the PV module 400. The information manager 210 acquires data of the residual quantity of the storage battery system 700. The information manager 210 causes the storage 250 to store the actual value of the quantity of power demand, and the like (Step S206).

The calculator 230 calculates a discharge unit price and a charging unit price (Step S207).

The charge/discharge control determinator 240 determines whether the threshold value of the discharge unit price is smaller than the discharge unit price (Step S208). When the threshold value of the discharge unit price is smaller than the discharge unit price (Yes in Step S208), the charge/discharge control determinator 240 generates a signal indicating a discharge instruction. The discharge instruction may be expressed by a value (Step S209).

The charge/discharge control determinator 240 transmits the generated signal to the storage battery system 700 (Step S210).

When the threshold value of the discharge unit price is not smaller than the discharge unit price in Step S208 (No in Step S208), the charge/discharge control determinator 240 determines whether the threshold value of a charging unit price is smaller than the charging unit price (Step S211). When the threshold value of the charging unit price is smaller than the charging unit price (Yes in Step S211), the charge/discharge control determinator 240 generates a signal indicating a charging instruction. The charging instruction may be expressed by a value (Step S212). The charge/discharge control determinator 240 advances the process to Step S210.

When the threshold value of the charging unit price is not smaller than the charging unit price in Step S211 (No in Step S211), the charge/discharge control determinator 240 generates a signal indicating a stop instruction (Step S213). The charge/discharge control determinator 240 advances the process to Step S210.

As described above, the cloud server device 100 (an apparatus operation plan creation device) according to an embodiment has the power generation quantity predictor 110, the power demand predictor 120, the hot water demand predictor 130, the estimator 140, the decider 150, the calculator 161, and the plan creator 162. The power generation quantity predictor 110 predicts a quantity of power generation of the PV module 400 (a photovoltaic device). The power demand predictor 120 predicts a quantity of power demand for the household consumer 10. The hot water demand predictor 130 predicts a quantity of hot water demand for the household consumer 10. The estimator 140 estimates a quantity of power generation of the FC system 800 (a fuel cell) for the household consumer 10 based on the predicted value of the quantity of hot water demand for the household consumer 10. The decider 150 decides a quantity of power storage of the storage battery system 700 based on the predicted value of the quantity of power demand and the estimated value of the quantity of power generation of the FC system 800. The calculator 161 calculates a power storage loss caused by charging of the storage battery system 700 and a power purchase loss that is based on the predicted value of the quantity of power demand based on the predicted value of the quantity of power generation of the PV module 400, the predicted value of the quantity of power demand, and the quantity of power storage of the storage battery system 700. The calculator 161 subtracts the sum of the power storage loss and the power purchase loss from a power sales profit based on the predicted value of the quantity of power generation of the PV module 400 to calculate a deduction amount that is the result of the subtraction. The plan creator 162 creates a threshold value for defining a charging or discharge operation of the storage battery system 700 and a plan for an operation or stop operation of the FC system 800 such that a deduction amount is increased.

With this configuration, the plan creator 162 creates a threshold value for defining a charging or discharge operation of the storage battery system 700 and a plan for an operation or stop operation of the FC system 800 such that the deduction amount is increased. The cloud server device 100, an apparatus operation plan creation method, and an apparatus operation plan creation program according to an embodiment can reduce lighting and heating expenses of the household consumer 10.

The cloud server device 100 according to an embodiment can reduce lighting and heating expenses of the household consumer 10 as well as heat energy.

The cloud server device 100 according to an embodiment can reduce lighting and heating expenses of the household consumer 10 even when an instantaneous value of power for apparatuses of the household consumer 10 varies.

The cloud server device 100 according to an embodiment can reduce lighting and heating expenses of the household consumer 10 even when communication between the cloud server device 100 and the local server device 200 is delayed.

The cloud server device 100 according to an embodiment calculates a charging value and a discharge value as indices for evaluating a net power purchase profit and a power sales loss taking a profit boosting effect into consideration. The cloud server device 100 according to the embodiment calculates a charging unit price that is a price per quantity of charge. The cloud server device 100 according to an embodiment calculates a discharge unit price that is a price per quantity of discharge.

Based on the charging unit price and the discharge unit price, the cloud server device 100 according to an embodiment creates a plan for a charging or discharge operation in which a power purchase profit can be maximized. That is, the cloud server device 100 according to the embodiment creates a plan for a charging or discharge operation in which a power sales loss can be minimized based on the charging unit price and the discharge unit price.

Therefore, the cloud server device 100 according to an embodiment can create the threshold value for defining a charging operation of the storage battery system 700 (charge rule) such that limited electric power is discharged from the storage battery system 700 in a time slot at which the discharge value is high. The cloud server device 100 according to the embodiment can accordingly maximize the net profit earned from power sales.

The threshold value for defining a discharge operation of the storage battery system 700 (discharge rule) is denoted by a discharge unit price threshold value Etth. The charge/discharge control determinator 240 according to an embodiment determines whether the storage battery system 700 should be discharged based on whether the actual value of the discharge unit price is equal to or higher than the discharge unit price threshold value Etth. Accordingly, the cloud server device 100 according to the embodiment can reduce the number of discharge rules and power storage rules compared with when turn-on and turn-off of discharge are controlled based on times, and thereby resources can be saved.

The calculator 161 according to an embodiment transmits information indicating the threshold value for defining a charging or discharge operation of the storage battery system 700 and information indicating a plan for an operation or stop operation of the FC system 800 to the local server device 200 of the household consumer 10.

The calculator 161 according to an embodiment calculates a predicted value of a discharge value that is the sum of an amount of a power purchase loss compensated for as a result of discharge of the storage battery system 700 recouping a predicted value of a quantity of power demand and a power sales profit for a plurality of periods. The calculator 161 calculates a predicted value of a discharge unit price that is the value obtained by dividing the calculated predicted value of the discharge value by a quantity of power discharged from the storage battery system 700 for a plurality of periods. The calculator 161 calculates a charging unit price that is the result obtained by subtracting a unit price of a power storage loss caused by charging of the storage battery system 700 from an increment by which a predicted value of a discharge unit price increases according to the charging of the storage battery system 700 for a plurality of periods. The plan creator 162 creates a threshold value such that discharge is performed in a period in which the predicted value of the discharge unit price is relatively high. The plan creator 162 creates a threshold value such that charging is performed in a period in which the charging unit price has a positive value.

The plan creator 162 according to an embodiment specifies a period in which the sum of predicted values of the quantity of power demand is equal to or greater than a quantity of power discharged from the storage battery system 700 when the predicted values of the quantity of power demand are added up in order of periods in which predicted values of the discharge unit price increase, and sets the predicted value of a discharge unit price of the specified period as a threshold value.

The calculator 161 according to an embodiment calculates a charging unit price and a discharge unit price with both a predicted value of a quantity of power demand and a quantity of power that is the result obtained by subtracting a quantity of power generation by the FC system 800 from the predicted value of the quantity of power demand.

The estimator 140 according to an embodiment estimates a quantity of power generation of the FC system 800 based on an upper limit of a predicted value of a quantity of hot water demand.

The estimator 140 according to an embodiment estimates a quantity of power generation of the FC system 800 based on power generation characteristics of the FC system 800.

According to the cloud server device 100 (an apparatus operation plan creation device) of at least one embodiment described above, lighting and heating expenses can be reduced by having the plan creator 162 that creates a threshold value for defining a charging or discharge operation of a storage battery and a plan for an operation or stop operation of a fuel cell such that a deduction amount is increased.

Although several embodiments of the present invention have been described above, these embodiments are presented merely as examples, and do not limit the scope of the invention. These embodiments can be implemented in other various forms, and can be subject to various omissions, replacements, and modifications within the scope not departing from the gist of the invention. Embodiments thereof or alterations thereof fall not only within the range or gist of the invention but also within the inventions described in the claims and a range equivalent thereto.

## Claims

1. An apparatus operation plan creation device comprising:
a power generation quantity predictor that predicts a quantity of power generation of a photovoltaic device for a household consumer;
a power demand predictor that predicts a quantity of power demand by the household consumer;
a hot water demand predictor that predicts a quantity of hot water demand by the household consumer;
an estimator that estimates a quantity of power generation by a fuel cell for the household consumer based on a predicted value of the quantity of hot water demand;
a decider that decides a quantity of power storage of a storage battery based on a predicted value of the quantity of power demand and an estimated value of the quantity of power generation by the fuel cell;
a calculator that calculates, based on a predicted value of the quantity of power generation of the photovoltaic device, the predicted value of the quantity of power demand, and the quantity of power storage of the storage battery, a power storage loss caused by charging of the storage battery and a power purchase loss that is based on the predicted value of the quantity of power demand, subtracts the sum of the power storage loss and the power purchase loss from a power sales profit that is based on the predicted value of the quantity of power generation of the photovoltaic device, and calculates a deduction amount that is the result of the subtraction; and
a plan creator that creates a threshold value for defining a charging or discharge operation of the storage battery and a plan for an operation or stop operation of the fuel cell such that the deduction amount is increased.

2. The apparatus operation plan creation device according to claim 1, wherein the plan creator transmits information indicating the threshold value for defining a charging or a discharge operation of the storage battery and information indicating the plan for an operation or stop operation of the fuel cell to a server device that controls the storage battery and the fuel cell.

3. The apparatus operation plan creation device according to claim 1,
wherein the calculator calculates a predicted value of a discharge value that is the sum of an amount of the power purchase loss compensated for as a result of discharge of the storage battery recouping the predicted value of the quantity of power demand for a plurality of periods, calculates a predicted value of a discharge unit price that is the value obtained by dividing the calculated predicted value of the discharge value by a quantity of power discharged from the storage battery for a plurality of periods, and calculates a charging unit price that is the result obtained by subtracting a unit price of a power storage loss caused by charging of the storage battery from an increment by which the predicted value of the discharge unit price increases according to the charging of the storage battery for a plurality of periods, and
wherein the plan creator creates the threshold value such that discharge is performed in the period in which the predicted value of the discharge unit price is relatively high, and creates the threshold value such that charging is performed in the period in which the charging unit price has a positive value.

4. The apparatus operation plan creation device according to claim 3, wherein, when predicted values of the quantity of power demand are added up in order of period in which predicted values of the discharge unit price increase, the plan creator specifies the period in which the sum of the predicted values of the quantity of power demand is equal to or greater than a quantity of power discharged from the storage battery, and sets a predicted value of the discharge unit price of the specified period as the threshold value.

5. The apparatus operation plan creation device according to claim 3, wherein the calculator calculates the charging unit price and the discharge unit price with both the predicted value of the quantity of power demand and a quantity of power that is the result obtained by subtracting the quantity of power generation by the fuel cell from the predicted value of the quantity of power demand.

6. The apparatus operation plan creation device according to claim 1, wherein the estimator estimates a quantity of power generation by the fuel cell based on an upper limit of the predicted value of the quantity of hot water demand.

7. The apparatus operation plan creation device according to claim 1, wherein the estimator estimates a quantity of power generation by the fuel cell based on power generation characteristics of the fuel cell.

8. An apparatus operation plan creation method of an apparatus operation plan creation device, the method comprising:
predicting a quantity of power generation of a photovoltaic device for a household consumer;
predicting a quantity of power demand by the household consumer;
predicting a quantity of hot water demand by the household consumer;
estimating a quantity of power generation by a fuel cell for the household consumer based on a predicted value of the quantity of hot water demand;
deciding a quantity of power storage of a storage battery based on a predicted value of the quantity of power demand and an estimated value of the quantity of power generation by the fuel cell;
calculating, based on a predicted value of the quantity of power generation of the photovoltaic device, the predicted value of the quantity of power demand, and the quantity of power storage of the storage battery, a power storage loss caused by charging of the storage battery and a power purchase loss that is based on the predicted value of the quantity of power demand, subtracting the sum of the power storage loss and the power purchase loss from a power sales profit that is based on the predicted value of the quantity of power generation of the photovoltaic device, and calculating a deduction amount that is the result of the subtraction; and
creating a threshold value for defining a charging or discharge operation of the storage battery and a plan for an operation or stop operation of the fuel cell such that the deduction amount is increased.

9. Anon-transitory storage medium storing an apparatus operation plan creation program causing a computer to execute:
predicting a quantity of power generation of a photovoltaic device for a household consumer;
predicting a quantity of power demand by the household consumer;
predicting a quantity of hot water demand by the household consumer;
estimating a quantity of power generation by a fuel cell for the household consumer based on a predicted value of the quantity of hot water demand;
deciding a quantity of power storage of a storage battery based on a predicted value of the quantity of power demand and an estimated value of the quantity of power generation by the fuel cell;
calculating, based on a predicted value of the quantity of power generation of the photovoltaic device, the predicted value of the quantity of power demand, and the quantity of power storage of the storage battery, a power storage loss caused by charging of the storage battery and a power purchase loss that is based on the predicted value of the quantity of power demand, subtracting the sum of the power storage loss and the power purchase loss from a power sales profit that is based on the predicted value of the quantity of power generation of the photovoltaic device, and calculating a deduction amount that is the result of the subtraction; and
creating a threshold value for defining a charging or discharge operation of the storage battery and a plan for an operation or stop operation of the fuel cell such that the deduction amount is increased.
